# FASCICULE DE BREVET EUROPEEN

(11) **EP 0 723 086 B1**
(45) Date de publication et mention de la délivrance du brevet: **12.08.1998**
(21) Numéro de dépôt: 96400090.5
(22) Date de dépôt: 15.01.1996
(51) Int. Cl.: F16B 31/02, B25B 23/14

(54) **Vis à tête sécable et outil de vissage pour une telle vis**
Schraube mit einem trennbaren Schraubenkopf und Schraubwerkzeug für eine solche Schraube
Screw with a separable head and screwing tool for such a screw

(30) Priorité: 17.01.1995 FR 9500440
(43) Date de publication de la demande: 24.07.1996
(73) Titulaire: Etablissements CAILLAU, F-92130 Issy-les-Moulineaux (FR)
(72) Inventeur: Detable, Pascal, F-41130 Villedieu Gièvres (FR); André, Michel, F-41200 Romorantin (FR); Covello, Fabienne, F-41200 Romorantin (FR)
(74) Mandataire: Hasenrader, Hubert

(56) Documents cités:
- CH-A- 228 721
- GB-A- 898 026
- GB-A- 2 060 452
- US-A- 3 444 775
- US-A- 3 742 583

## Description

La présente invention concerne une vis comprenant, successivement disposés entre sa première et sa deuxième extrémité, une première tête polygonale, un col de rupture, une deuxième tête polygonale et un fût fileté, le col de rupture présentant un diamètre inférieur à ceux des têtes et du fût.

On connaît déjà une vis de ce type, notamment par le brevet GB-A-898 026. Le col de rupture est susceptible d'être rompu au cours du serrage, lorsque le couple de serrage a atteint une valeur prédéterminée correspondant au diamètre minimum du col. La deuxième tête, la plus proche du fût, reste néanmoins utilisable pour le démontage et éventuellement la remise en place de la vis.

La rupture du col, c'est-à-dire la séparation de la première tête du reste de la vis, permet d'éviter tout serrage excessif.

Lorsque la première tête est sectionnée, aucun moyen n'est prévu pour la retenir, de sorte qu'elle tombe simplement au sol.

En raison notamment du danger qui pourrait en résulter, il n'est pas acceptable que des têtes de vis jonchent le sol d'un atelier de montage, de sorte que les opérateurs doivent régulièrement ramasser ces têtes de vis. Le fait que les têtes de vis tombent au sol a donc pour conséquence une gêne et un ralentissement du travail des opérateurs.

La présente invention a pour but de remédier à ces inconvénients et propose une vis du type précité, améliorée pour permettre la récupération de la première tête après la rupture du col.

Dans ce but, la vis comporte, en outre, une portion cylindrique de portée, située entre le col de rupture et la deuxième tête et présentant un diamètre au moins égal à celui du col de rupture et inférieur à celui de la deuxième tête.

Le diamètre de la portion cylindrique de portée est, de préférence, supérieur à celui du col de rupture.

De manière avantageuse, la vis présente un épaulement situé entre la portion cylindrique de portée et la deuxième tête, tandis que l'extrémité libre de la première tête présente une portion sensiblement tronconique allant en s'élargissant vers le col de rupture.

L'invention concerne également un outil de vissage pour une telle vis, comprenant un embout de vissage et des moyens d'entraînement en rotation. L'embout comporte un tube ayant des dimensions diamétrales internes adaptées à recevoir au moins la première tête de la vis, présentant une première extrémité ouverte vers l'extérieur de l'embout et comprenant une portion dite de prise, susceptible d'entrer en prise avec la première tête de la vis.

Les outils de vissage connus ne permettent pas, après la rupture du col de la vis, d'éviter que la première tête sectionnée ne tombe au sol et, par conséquent, ne constitue une gêne pour les opérateurs.

L'invention se propose de remédier à cet inconvénient.

Dans ce but, l'outil de vissage comporte des moyens élastiques disposés entre la première extrémité et la portion de prise du tube, ces moyens élastiques faisant, à l'état libre, radialement saillie à l'intérieur du tube et étant susceptibles de s'effacer pour permettre l'insertion de la première tête de la vis jusqu'à la portion de prise du tube et de coopérer avec la portion cylindrique de portée de la vis, lorsque la première tête de cette dernière se trouve dans ladite portion de prise.

De plus, l'outil comporte une chambre de stockage et un organe d'ouverture et de fermeture de cette chambre, cette dernière étant raccordée à la portion de prise et étant susceptible de contenir au moins une première tête de vis sectionnée.

Grâce à cette conformation, après la rupture du col, la première tête sectionnée de la vis reste engagée dans l'outil et ne tombe pas au sol puisque les moyens élastiques l'empêchent de ressortir par la première extrémité du tube. Lorsqu'il le juge nécessaire, l'opérateur peut ouvrir la chambre de stockage et la vider dans un récipient choisi.

L'invention sera bien comprise et ses avantages apparaîtront mieux à la lecture de la description détaillée qui suit, d'un mode de réalisation indiqué à titre d'exemple non limitatif.

La description se réfère aux dessins annexés sur lesquels :
- les figures 1, 3, 5 et 7 sont des vues partielles en coupe longitudinale montrant la première extrémité de l'embout de l'outil de vissage et la vis selon l'invention dans quatre positions relatives successives,
- les figures 2, 4, 6 et 8 sont des vues en coupe transversale respectivement selon les lignes II-II, IV-IV, VI-VI et VIII-VIII des figures 1, 3, 5 et 7.
- la figure 9 est une vue de dessus de l'outil de vissage selon l'invention, sur laquelle la chambre de stockage est fermée, et
- la figure 10 est une vue en élévation de l'outil de la figure 9, en position ouverte de la chambre de stockage, avec un arrachement partiel.

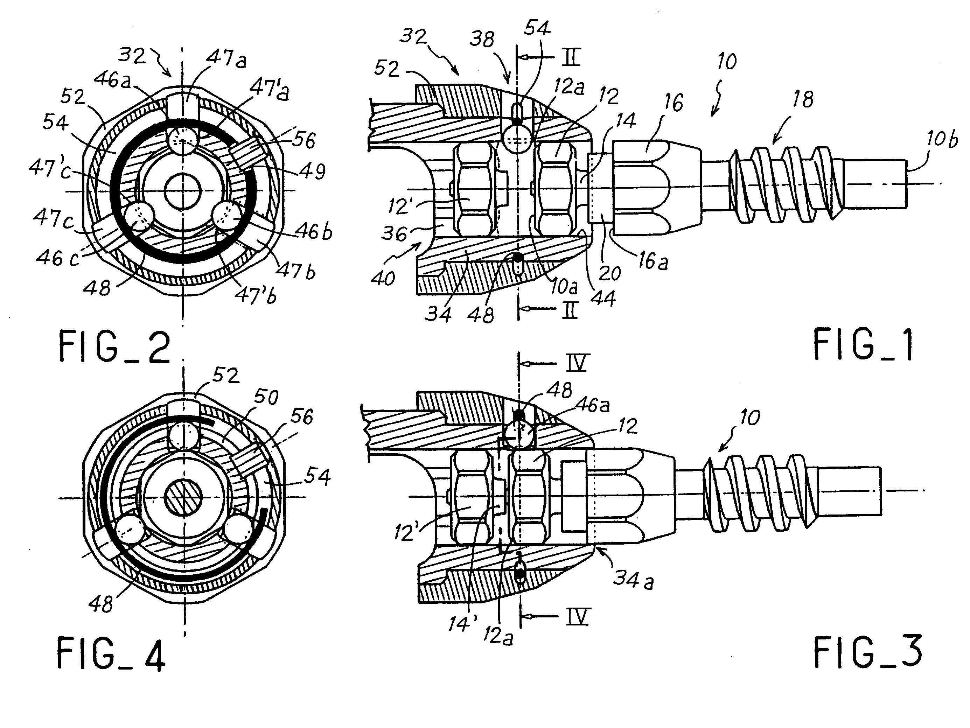

La figure 1 montre une vis 10 qui comporte une première extrémité 10a et une seconde extrémité 10b entre lesquelles elle présente successivement une première tête polygonale 12, un col de rupture 14, une deuxième tête polygonale 16 et un fût fileté 18.

Par tête polygonale, on entend une tête dont la périphérie radiale présente des facettes destinées à coopérer avec un outil de vissage. Dans l'exemple représenté, les têtes de la vis sont de section hexagonale. Elles possèdent de préférence le même diamètre.

Le col de rupture est une zone de fragilité, susceptible d'être rompue au cours du serrage de la vis par sa première tête 12 et dont le diamètre est inférieur à ceux des têtes 12 et 16 et du fût 18.

Entre ce col de rupture 14 et la deuxième tête 16, la vis comporte une portion cylindrique de portée 20, dont le diamètre est supérieur à celui du col de rupture et inférieur à celui de la deuxième tête.

La fonction de cette portion cylindrique de portée sera explicitée dans la suite, lorsque l'on décrira les différentes étapes du vissage de la vis à l'aide de l'outil de vissage selon l'invention.

La vis 10 présente un épaulement 16a situé entre la portion cylindrique de portée 20 et la deuxième tête 16. En fait, cet épaulement 16a est réalisé sur l'extrémité de la tête 16 la plus proche de la première extrémité 10a de la vis. En revanche, l'extrémité libre de la première tête 12 présente une portion sensiblement tronconique 12a allant en s'élargissant vers le col de rupture 14.

En fait, la première tête 12 de la vis est réalisée de manière classique, c'est-à-dire que son extrémité libre 12a est légèrement chanfreinée.

On décrit maintenant l'outil de vissage selon l'invention, à l'aide duquel on peut visser la vis 10 par sa première tête 12 et récupérer cette dernière en évitant de la laisser tomber au sol.

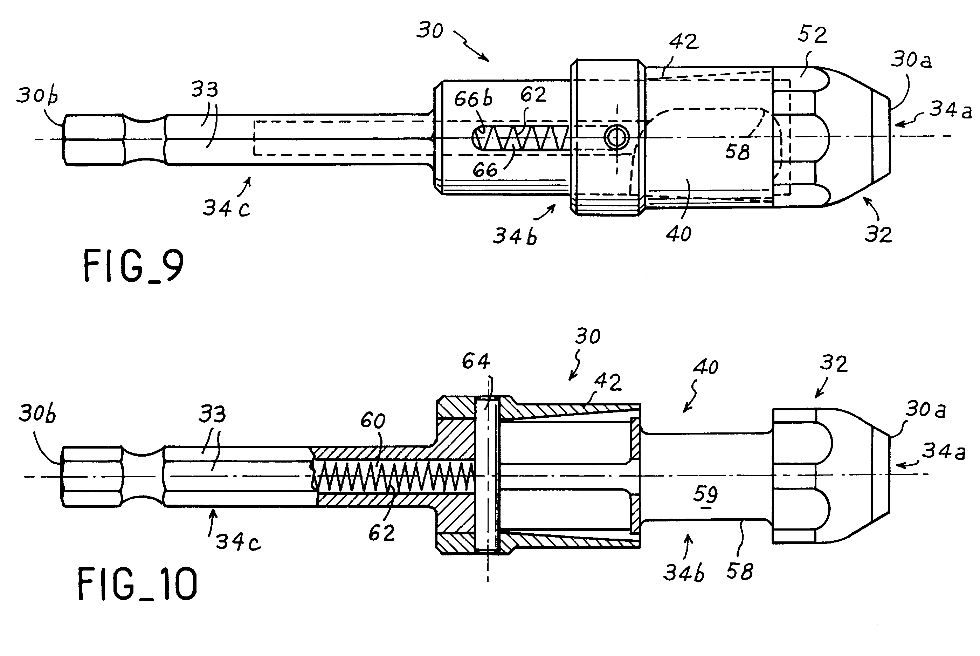

Comme on le voit sur la figure 9, cet outil de vissage 30 comporte un embout de vissage 32 et des moyens d'entraînement en rotation 33. Dans l'exemple représenté, ces moyens d'entraînement en rotation sont constitués par une pluralité de facettes réalisées sur l'extrémité 30b de l'outil opposée à l'extrémité 30a sur laquelle débouche l'embout 32. Ainsi, l'extrémité 30b peut présenter la forme d'une mèche à section polygonale qui peut coopérer par complémentarité de forme avec un outil classique d'entraînement en rotation. En fait, l'outil de vissage peut être muni de tous moyens connus d'entraînement en rotation.

Comme on le voit sur la figure 1, l'embout 32 comporte un tube 34 ayant des dimensions diamétrales internes adaptées à recevoir au moins la première tête 12 de la vis. Plus précisément, ce tube présente une première extrémité 34a ouverte vers l'extérieur de l'embout et comprend successivement, à partir de cette première extrémité, une portion cylindrique 44, dite de guidage, des moyens élastiques 38 et une portion 36 de prise susceptible d'entrer en prise avec la première tête 12 de la vis.

La portion cylindrique de guidage 44 a ia forme d'un cylindre à base circulaire dont le diamètre correspond sensiblement au diamètre du cercle circonscrit à la deuxième tête 16 de la vis. La portion de prise 36 est en général prismatique, de forme complémentaire à celle de la première tête de la vis, et susceptible de coopérer avec elle.

Les moyens élastiques représentés sur les figures comportent au moins une bille et un organe élastique coopérant avec cette dernière. Le tube présente au moins un perçage radial dans lequel est placée la bille.

En fait, comme le montrent les vues en coupe transversale, par exemple la figure 2, trois billes 46a, 46b et 46c sont respectivement placées dans trois perçages cylindriques radiaux 47a, 47b et 47c. Ces perçages radiaux traversent le tube 34 de part en part. Leurs extrémités internes 47'a, 47'b et 47'c situées du côté de la périphérie interne du tube 34 présentent un diamètre inférieur à celui des billes qu'ils contiennent.

A l'état libre des moyens élastiques, les billes 46a, 46b et 46c font radialement saillie à l'intérieur du tube 34 sous l'action de l'organe élastique 48 qui maintient chaque bille en butée contre le bord de l'extrémité interne du perçage dans lequel elle est disposée.

En fait, les perçages présentent globalement la forme d'un cylindre dont le diamètre est au moins égal à celui des billes. Seules leurs extrémités internes sont resserrées pour empêcher la bille de sortir à l'intérieur du tube. Le diamètre de l'extrémité interne des perçages est seulement légèrement inférieur à celui des billes de sorte que, lorsqu'elles reposent en butée contre le bord de ces extrémités internes sous l'effet de l'organe élastique, elles dépassent à l'intérieur du tube.

La périphérie externe du tube 34 présente une gorge annulaire 50 (bien visible sur la figure 4) dans laquelle débouchent les perçages radiaux. L'organe élastique 48 est constitué par un anneau fendu disposé dans cette gorge annulaire et susceptible ainsi de voir son diamètre augmenter élastiquement pour permettre l'effacement des billes.

Le tube 34 est coiffé par un manchon 52 qui protège les billes et l'anneau fendu. Pour permettre l'augmentation de diamètre de cet anneau, la périphérie interne du manchon présente une gorge annulaire 54 située en regard de la gorge 50. Le manchon 52 est fixé sur le tube à l'aide d'une vis 56 qui traverse les gorges 54 et 50, pénètre dans la fente 49 de l'anneau fendu 48 et est vissée sur le tube 34. La vis 56 empêche donc également l'anneau 48 de tourner et maintient sa fente 49 en dehors des perçages radiaux, ce qui permet d'éviter que les billes ne sortent de ces perçages.

L'outil de vissage comporte, en outre, une chambre de stockage 40 et des moyens 42 d'ouverture et de fermeture de cette chambre. La chambre de stockage, dont on voit l'amorce sur la figure 1, est raccordée à la portion de prise 36 et est susceptible de contenir au moins une première tête de vis sectionnée.

Le tube 34 s'étend d'une extrémité à l'autre de l'outil de vissage. Il présente une partie intermédiaire 34b située entre la portion de prise 36 et sa deuxième extrémité 34c pourvue des moyens d'entraînement en rotation 33 précédemment évoqués.

La chambre de stockage 40 est ménagée dans la partie intermédiaire 34b qui présente une ouverture longitudinale 58. En fait, sur le tronçon muni de l'ouverture 58, seule une portion 59 de la paroi du tube 34 subsiste. Cette portion 59 constitue une paroi de la chambre de stockage 40. Cette dernière peut être ouverte ou fermée à l'aide d'une bague 42 montée coulissante le long du tube 34 entre une première position, illustrée par la figure 9, dans laquelle elle obture l'ouverture longitudinale 58 et une deuxième position illustrée par la figure 10, dans laquelle elle libère cette ouverture.

La bague 42 est élastiquement sollicitée vers sa première position. A cet effet, un tronçon du tube situé entre la chambre de stockage 40 et la deuxième extrémité 34c de ce tube présente un perçage axial 60 dans lequel est logé un ressort 62. Ce ressort est raccordé à une tige 64, traversant diamétralement la bague et fixée à cette dernière, qui peut se déplacer dans une fente 66 du tube. Dans la première position de la bague, le ressort est en position expansée, ce qui maintient cette bague en butée contre le manchon 52.

Les figures 1 à 8 illustrent différentes étapes du vissage de la vis 10 à l'aide de l'outil de vissage 30. Sur la figure 1 on voit que la portion de prise 36 du tube contient la première tête 12' d'une vis qui vient d'être sectionnée. Dans cette situation, avant l'insertion de la vis 10 jusqu'à la portion de prise 36, les billes 46a, 46b et 46c occupent naturellement leur position à l'état libre, dans laquelle elles font saillie à l'intérieur du tube 34 et empêchent la tête 12' de ressortir par l'extrémité 34a de ce tube. La figure 1 montre la vis 10 au début de son insertion dans le tube, alors qu'elle est seulement engagée dans le portion cylindrique de guidage 44.

Ensuite, lorsque l'on continue d'insérer la vis à l'intérieur du tube, sa première tête 12 arrive au contact des billes et les repousse radialement vers l'extérieur, c'est-à-dire qu'elle les oblige à s'effacer à son passage en provoquant l'expansion de l'anneau fendu 48. A cette occasion, la portion sensiblement tronconique 12a de la tête 12 joue le rôle d'une rampe qui coopère avec les billes.

La position effacée des billes est illustrée par la figure 3 et par la figure 4, cette dernière étant une coupe transversale selon la ligne IV-IV de la figure 3, passant par le col de rupture 14' de la tête 12' sectionnée, sur laquelle on voit l'anneau fendu 48 en position expansée.

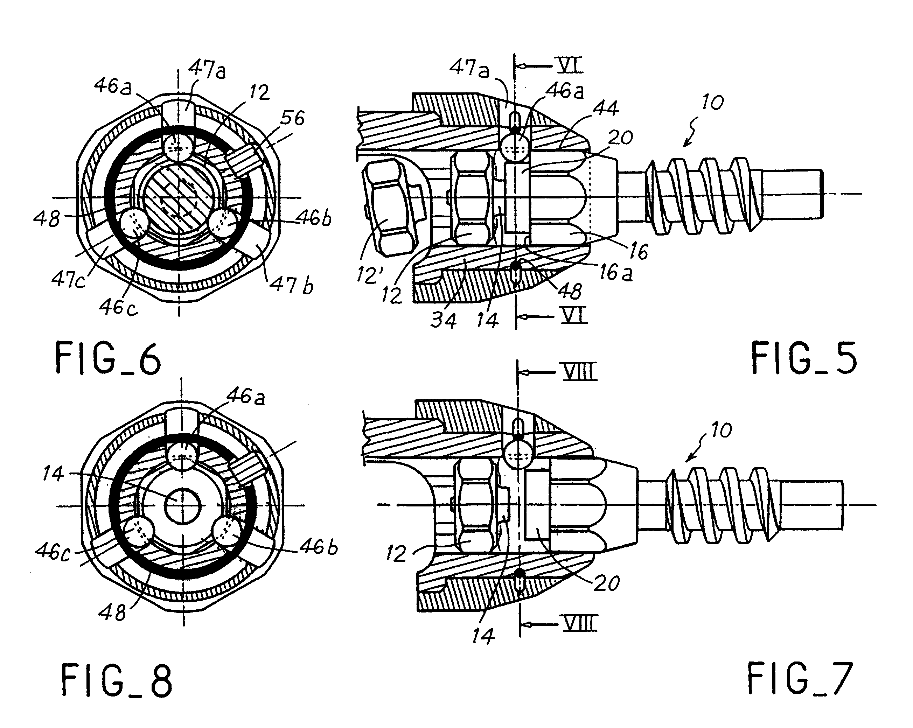

Lorsque, comme le montre la figure 5, la première tête 12 de la vis pénètre dans la portion de prise 36 du tube 34, elle repousse la première tête sectionnée 12' dans la chambre de stockage 40. La progression axiale de la vis à l'intérieur du tube est arrêtée lorsque l'épaulement 16a de la deuxième tête 16 de cette vis arrive en butée contre les billes. Dans cette position, les billes coopèrent avec la portion cylindrique de portée 20 et l'on peut réaliser le vissage de manière classique jusqu'à ce que le col de rupture 14 se brise. Lors du vissage, la première tête est entraînée par la portion de prise 36, tandis que la deuxième tête, insérée dans la portion de guidage 44, est simplement guidée sans que ne s'exerce sur elle aucune action de vissage.

La portion cylindrique de portée 20 ayant un diamètre inférieur à celui des têtes de la vis, les billes peuvent au cours du vissage coopérer avec cette portion 20 tout en faisant saillie à l'intérieur du tube, c'est-à-dire qu'elles adoptent une position, proche de l'état libre, dans laquelle elles empêchent la tête 12 de ressortir.

Le fait de doter la portion cylindrique de portée 20 d'un diamètre supérieur à celui du col de rupture 14 permet de faire en sorte que la vis soit précisément sectionnée à la jonction de ces deux éléments, c'est-à-dire au-delà des billes dans le sens allant vers la portion de prise du tube.

Les figures 7 et 8 montrent la situation à la fin du vissage lorsque, après la rupture du col 14, on retire la vis 10 privée de sa première tête 12 qui reste emprisonnée dans le tube 34 et prend ainsi la place de la tête 12' de la figure 1. Quand on juge que le nombre de têtes sectionnées présentes dans la chambre de stockage 40 rend nécessaire le vidage de cette chambre, on peut mener à bien cette opération en amenant la bague 42 vers sa deuxième position pour libérer l'ouverture 58. A cette occasion, le ressort 62 se contracte jusqu'à ce que la tige 64 bute contre le bord 66b de la fente 66 situé du côté de l'arrière du tube.

## Revendications

1. Vis (10) comportant, successivement disposés entre sa première et sa seconde extrémité (10a, 10b), une première tête polygonale (12), un col de rupture (14), une deuxième tête polygonale (16) et un fût fileté (18), le col de rupture (14) présentant un diamètre inférieur à ceux des têtes (12, 16) et du fût (18),
caractérisée en ce qu'elle comporte, en outre, une portion cylindrique de portée (20), située entre le col de rupture (14) et la deuxième tête (16) et présentant un diamètre au moins égal à celui du col de rupture (14) et inférieur à celui de la deuxième tête (16).

2. Vis selon la revendication 1, caractérisée en ce que la portion cylindrique de portée (20) présente un diamètre supérieur à celui du col de rupture (14).

3. Vis selon l'une des revendications 1 et 2, caractérisée en ce qu'elle présente un épaulement (16a) situé entre la portion cylindrique de portée (20) et la deuxième tête (16), tandis que l'extrémité libre de la première tête (12) présente une portion sensiblement tronconique (12a) allant en s'élargissant vers le col de rupture (14).

4. Outil de vissage (30) pour une vis (10) selon l'une quelconque des revendications 1 à 3, comprenant un embout de vissage (32) et des moyens d'entraînement en rotation (33), l'embout comportant un tube (34) ayant des dimensions diamétrales internes adaptées à recevoir au moins la première tête (12) de la vis (10), présentant une première extrémité (34a) ouverte vers l'extérieur de l'embout (32) et comprenant une portion (36) dite de prise, susceptible d'entrer en prise avec la première tête (12) de la vis,
caractérisé en ce qu'il comporte des moyens élastiques (38) disposés entre la première extrémité (34a) et la portion de prise (36) du tube (34), ces moyens élastiques faisant, à l'état libre, radialement saillie à l'intérieur du tube (34) et étant susceptibles de s'effacer pour permettre l'insertion de la première tête de la vis jusqu'à la portion de prise (36) du tube et de coopérer avec la portion cylindrique de portée (20) de la vis (10), lorsque la première tête (12) de cette dernière se trouve dans ladite portion de prise, et
en ce qu'il comporte une chambre de stockage (40) et des moyens d'ouverture et de fermeture (42) de ladite chambre, cette dernière étant raccordée à la portion de prise (36) et étant susceptible de contenir au moins une première tête (12) de vis sectionnée.

5. Outil selon la revendication 4, caractérisé en ce que le tube (34) comporte, entre sa première extrémité (34a) et les moyens élastiques (38), une portion cylindrique de guidage (44) pour la deuxième tête (16) de la vis.

6. Outil selon l'une des revendications 4 et 5, caractérisé en ce que les moyens élastiques (38) comportent au moins une bille (46a, 46b, 46c) et un organe élastique (48) coopérant avec cette dernière, et en ce que le tube présente au moins un perçage radial (47a, 47b, 47c), dans lequel est placée la bille et dont l'extrémité interne (47a, 47'b, 47'c), située du côté de la périphérie interne du tube (34), présente un diamètre inférieur à celui de la bille, l'organe élastique maintenant, à l'état libre, la bille en butée contre le bord de l'extrémité interne dudit perçage.

7. Outil selon la revendication 6, caractérisé en ce que la périphérie externe du tube (34) présente une gorge annulaire (50) dans laquelle débouche le perçage radial (47a, 47b, 47c) et en ce que l'organe élastique (48) est constitué par un anneau fendu disposé dans ladite gorge annulaire (50).

8. Outil selon l'une quelconque des revendications 4 à 7, caractérisé en ce que la chambre de stockage (40) est ménagée dans une partie intermédiaire (34b) du tube (34), située entre la portion de prise (36) et la deuxième extrémité (34c) du tube et présentant une ouverture longitudinale (58), et en ce que les moyens d'ouverture et de fermeture de ladite chambre comprennent une bague (42) susceptible de coulisser le long du tube (34) entre une première position dans laquelle elle obture ladite ouverture longitudinale (58) et une deuxième position dans laquelle elle libère cette ouverture, ladite bague étant élastiquement sollicitée vers sa première position.

## Patentansprüche

1. Schraube (10), welche hintereinander zwischen ihrem ersten und ihrem zweiten Ende (10a, 10b) einen ersten polygonalen Kopf (12), einen Bruchhals (14), einen zweiten polygonalen Kopf (16) und einen Gewindenschaft (18) aufweist, wobei der Bruchhals (14) einen Durchmesser hat, der kleiner als jener der Köpfe (12, 16) und des Gewindeschafts (18) ist, dadurch gekennzeichnet, daß sie außerdem einen zylindrischen Sitzabschnitt (20) aufweist, der sich zwischen dem Bruchhals (14) und dem zweiten Kopf (16) befindet und einen Durchmesser hat, der zumindest gleich dem des Bruchhalses (14) und kleiner als der des zweiten Kopfes (16) ist.

2. Schraube nach Anspruch 1, dadurch gekennzeichnet, daß der zylindrische Sitzabschnitt (20) einen Durchmesser aufweist, der größer als jener des Bruchhalses (14) ist.

3. Schraube nach Anspruch 1 oder 2, dadurch gekennzeichnet, daß sie einen Absatz (16a) aufweist, der zwischen dem zylindrischen Sitzabschnitt (20) und dem zweiten Kopf (16) angeordnet ist, während das freie Ende des ersten Kopfes (12) einen im wesentlichen kegelstumpfartigen Abschnitt (12a) aufweist, der sich zum Bruchhals (14) hin vergrößert.

4. Schraubwerkzeug (30) für eine Schraube (10) nach einem der Ansprüche 1 bis 3, mit einem Schraubansatz (32) und mit Drehantriebsmitteln (33), wobei der Ansatz ein Rohr (34) aufweist, dessen Innendurchmesserabmessungen zur Aufnahme mindestens des ersten Kopfes (12) der Schraube (10) ausgelegt sind, und das ein zur Außenseite des Ansatzes (32) hin offenes erstes Ende (34a) aufweist und einen Eingriffs-Abschnitt genannten Abschnitt (36) aufweist, der mit dem ersten Kopf (12) der Schraube in Eingriff gelangen kann, dadurch gekennzeichnet, daß es federnde Mittel (38) enthält, die zwischen dem ersten Ende (34a) und dem Eingriffs-Abschnitt (36) des Rohres (34) angeordnet sind, wobei diese federnden Mittel im freien Zustand radial in das Innere des Rohres (34) vorspringen und sich zurück-verstellen können, um ein Einführen des ersten Kopfes der Schraube bis zum Eingriffs-Abschnitt (36) des Rohres zu gestatten, und mit dem zylindrischen Sitzabschnitt (20) der Schraube (10) zusammenwirken zu können, wenn sich der erste Kopf (12) der letzteren im Eingriffs-Abschnitt befindet, und daß es eine Aufnahmekammer (40) und Mittel (42) zum Öffnen und Schließen dieser Kammer enthält, wobei letztere an den Eingriffs-Abschnitt (36) anschließt und mindestens den ersten Kopf (12) der geteilten Schraube aufnehmen kann.

5. Werkzeug nach Anspruch 4, dadurch gekennzeichnet, daß das Rohr (34) zwischen seinem ersten Ende (34a) und den federnden Mitteln (38) einen zylindrischen Führungsabschnitt (44) für den zweiten Kopf (16) der Schraube aufweist.

6. Werkzeug nach Anspruch 4 oder 5, dadurch gekennzeichnet, daß die federnden Mittel (38) mindestens eine Kugel (46a, 46b, 46c) und ein mit letzterer zusammenwirkendes elastisches Element (48) aufweisen, und daß das Rohr mindestens eine radiale Bohrung (47a, 47b, 47c) aufweist, in welcher die Kugel plaziert ist und deren inneres Ende (47'a, 47'b, 47'c), das an der Seite des Innenumfangs des Rohres (34) angeordnet ist, einen kleineren Durchmesser als die Kugel aufweist, wobei das elastische Element im freien Zustand die Kugel in Anschlag gegen den Rand des inneren Endes dieser Bohrung gedrückt hält.

7. Werkzeug nach Anspruch 6, dadurch gekennzeichnet, daß der Außenumfang des Rohres (34) eine Ringnut (50) aufweist, in welche die radiale Bohrung (47a, 47b, 47c) mündet, und daß das elastische Element (48) durch einen aufgeschnittenen Ring gebildet ist, der in der Ringnut (50) angeordnet ist.

8. Werkzeug nach einem der Ansprüche 4 bis 7, dadurch gekennzeichnet, daß die Aufnahmekammer (40) in einem Zwischenstück (34b) des Rohres (34) angeordnet ist, das zwischen dem Eingriffs-Abschnitt (36) und dem zweiten Ende (34c) des Rohres liegt und eine Längsöffnung (58) aufweist, und daß die Mittel zum Öffnen und Schließen dieser Kammer einen Ring (42) aufweisen, der längs des Rohres (34) zwischen einer ersten Position, in der er die Längsöffnung (58) verschließt, und einer zweiten Position gleitbar ist, in der er diese Öffnung freigibt, wobei der Ring in seine erste Position hin federnd belastet ist.

## Claims

1. A screw (10) comprising, in succession between a first end (10a) and a second end (10b) thereof: a first polygonal head (12); a breakable neck (14); a second polygonal head (16); and a threaded shank (18); the diameter of the breakable neck (14) being smaller than the diameters of the heads (12, 16) and of the shank (18),
the screw being characterized in that it further comprises a cylindrical bearing surface portion (20) situated between the breakable neck (14) and the second head (16), and having a diameter not less than that of the breakable neck (14), but less than that of the second head (16).

2. A screw according to claim 1, characterized in that the diameter of the cylindrical bearing surface portion (20) is greater than that of the breakable neck (14).

3. A screw according to claim 1 or 2, characterized in that it has a shoulder (16a) situated between the cylindrical bearing surface portion (20) and the second head (16), while the free end of the first head (12) has a substantially frustoconical portion (12a) flaring towards the breakable neck (14).

4. A tightening tool (30) for tightening a screw (10) according to any one of claims 1 to 3, the tool comprising a tightening endpiece (32) and rotary drive means (33), the endpiece comprising a tube (34) with inside diametral dimensions adapted to receive at least the first head (12) of the screw (10), having a first end (34a) that opens towards the outside of the endpiece (32) and including an "engagement" portion (36) suitable for engaging the first head (12) of the screw,
the tool being characterized in that it includes resilient means (38) disposed between the first end (34a) and the engagement portion (36) of the tube (34), said resilient means, when in the free state, projecting radially into the tube (34) and being suitable both for retracting to enable the first head portion of the screw to be inserted into the engagement portion (36) of the tube and for co-operating with the cylindrical bearing surface portion (20) of the screw (10) when the first head (12) thereof is inside said engagement portion, and
in that it includes a storage chamber (40) and means (42) for opening and closing said chamber, the chamber being connected to the engagement portion (36) and being suitable for containing at least one severed first screw head (12).

5. A tool according to claim 4, characterized in that, in between its first end (34a) and the resilient means (38), the tube (34) includes a cylindrical guide portion (44) for the second head (16) of the screw.

6. A tool according to claim 4 or 5, characterized in that the resilient means (38) include at least one ball (46a, 46b, 46c) and a resilient member (48) co-operating therewith, and in that the tube has at least one radial bore (47a, 47b, 47c) in which a respective ball is placed and having an inside end (47'a, 47'b, 47'c) adjacent to the inside periphery of the tube (34) which is of a diameter smaller than that of its ball, such that the resilient member, when in the free state, keeps the balls in abutment against the inside end edges of said bores.

7. A tool according to claim 6, characterized in that the outer periphery of the tube (34) has an annular groove (50) into which the at least one radial bore (47a, 47b, 47c) opens out, and in that the resilient member (48) is constituted by a split ring disposed in said annular groove (50).

8. A tool according to any one of claims 4 to 7,
characterized in that the storage chamber (40) is formed in an intermediate portion (34b) of the tube (34), situated between the engagement portion (36) and the second end (34c) of said tube, and having a longitudinal opening (58), and in that the means for opening and closing said chamber comprise a ring (42) suitable for sliding along said tube (34) between a first position in which it closes said longitudinal opening (58) and a second position in which it disengages said opening, said ring being urged resiliently towards its first position.
